# EUROPEAN PATENT APPLICATION

(11) **EP 4 723 373 A1**
(43) Date of publication of application: **08.04.2026**
(21) Application number: 24906353.8
(22) Date of filing: 17.12.2024
(51) Int. Cl.: H01Q 1/24

(54) **ELECTRONIC DEVICE**

(30) Priority: 20.12.2023 CN 202311773416
(71) Applicant: REALME MOBILE TELECOMMUNICATIONS (SHENZHEN) CO., LTD., Shenzhen, Guangdong 518066 (CN)
(72) Inventor: ZHANG, Changshun, Shenzhen, Guangdong 518066 (CN); XIANG, Yuanbin, Shenzhen, Guangdong 518066 (CN)
(74) Representative: Penza, Giancarlo
(86) International application number: PCT/CN2024/139978
(87) International publication number: WO 2025/130873

(57) **Abstract**

The present disclosure relates to an antenna assembly and an electronic device. The electronic device includes a middle frame and a housing which are in an integrated structure. A circuit board is provided on the middle frame, and there is a gap between the circuit board and the housing. The antenna assembly includes: an antenna bracket accommodated in the gap, one end of the antenna bracket being fixedly connected to the middle frame; and a flexible radiator, where the antenna bracket is configured to support the flexible radiator, and the flexible radiator is electrically connected to the circuit board for signal transmission and reception.

## Description

### CROSS-REFERENCE OF RELATED APPLICATION

This application claims priority to Chinese Patent Application No. 2023117734162, filed with China National Intellectual Property Administration on December 20, 2023, and titled "Electronic Device", the entire contents of which are incorporated herein by reference.

### TECHNICAL FIELD

The present disclosure relates to the field of antenna technologies, and particularly to an electronic device.

### BACKGROUND

With users' extreme demands for functions and appearance of electronic devices, electronic devices with an integrated middle frame have become the mainstream. Taking the mobile phone as an example, more and more mobile phones currently adopt a rear case and a middle frame which are in an integrated structure (i.e., the rear case and the middle frame are integral with each other). In the case of adopting such an integrated middle frame structure, the conventional antenna design scheme for a separated middle frame is no longer applicable.

In the related art, for mobile phones with an integrated middle frame structure, an alloy insert inherent in the integrated middle frame is usually used as antenna for the mobile phone. The alloy insert needs to be divided into multiple relatively independent insert structures, and gold-plated copper foil needs to be spot-welded at the position of the antenna feed point where the alloy insert is connected to the circuit board of the mobile phone.

However, the above-mentioned antenna arrangement method has problems of poor arrangement flexibility and high cost.

### SUMMARY

Embodiments of the present disclosure provide an antenna assembly and an electronic device, which can improve the arrangement flexibility of the antenna assembly and reduce the cost of the antenna assembly.

In a first aspect, an antenna assembly is provided. The antenna assembly is configured to be used in an electronic device. The electronic device includes a middle frame and a housing, the middle frame and the housing being in an integrated structure. A circuit board is provided on the middle frame, and there is a gap between the circuit board and the housing. The antenna assembly includes:
an antenna bracket accommodated in the gap, one end of the antenna bracket being fixedly connected to the middle frame; and
a flexible radiator, where the antenna bracket is configured to support the flexible radiator, and the flexible radiator is electrically connected with the circuit board for signal transmission and reception.

In a second aspect, an electronic device is provided. The electronic device includes: a middle frame and a housing which are in an integrated structure; a circuit board provided on the middle frame; and the antenna assembly according to the first aspect. There is a gap between the circuit board and the housing. The antenna assembly includes:
an antenna bracket accommodated in the gap, one end of the antenna bracket being fixedly connected to the middle frame; and
a flexible radiator, where the antenna bracket is configured to support the flexible radiator, and the flexible radiator is electrically connected with the circuit board for signal transmission and reception.

The technical solutions provided by the embodiments of the present disclosure bring about at least beneficial effects as follows.

The antenna assembly provided by the embodiments of the present disclosure is used in an electronic device. The electronic device includes a middle frame and a housing which are in an integrated structure. A circuit board is provided on the middle frame, and there is a gap between the circuit board and the housing. The antenna assembly includes an antenna bracket and a flexible radiator. The antenna bracket is configured to support the flexible radiator, and it is accommodated in the gap. One end of the antenna bracket is fixedly connected to the middle frame. The flexible radiator is electrically connected to the circuit board for signal transmission and reception. In this way, in the embodiments of the present disclosure, the antenna bracket is arranged in the gap between the circuit board and the housing for supporting the flexible radiator, so as to realize the performance of an antenna. There is no need to use, as the antenna, an alloy insert in the integrated middle frame structure as in the conventional technology in which the alloy insert needs to be divided into multiple relatively independent insert structures, and usually, for the convenience of molding and processing, a material-connecting structure is required to connect the multiple independent insert structures, and computerized numerical control (CNC) cutting is performed after completion of the molding, which leads to problems such as complex antenna molding and processing, long production cycle, and high antenna cost. The antenna assembly in the embodiments of the present disclosure has a simple manufacturing process and a significantly reduced cost. In addition, in the embodiments of the present disclosure, it is easy to electrically connect the flexible radiator to the circuit board, and there is no need to spot-weld gold-plated copper foil at the connection position where the flexible radiator and the circuit board are connected to improve the contact reliability. Thus, it further reduces the cost of the antenna assembly, and makes the arrangement of the antenna assembly more flexible.

### BRIEF DESCRIPTION OF THE DRAWINGS

FIG. 1 is a schematic diagram illustrating the antenna arrangement of a mobile phone adopting an integrated middle frame in the related art.
FIG. 2 is a cross-sectional view of an electronic device along a first direction, when an antenna assembly of the embodiments of the present disclosure is provided in the electronic device.
FIG. 3 is a schematic structural diagram of an exemplary antenna assembly of the embodiments of the present disclosure from a first perspective.
FIG. 4 is a schematic structural diagram of the exemplary antenna assembly of the embodiments of the present disclosure from a second perspective.
FIG. 5 is a schematic diagram illustrating exemplary arrangement positions of a primary cellular antenna assembly and a diversity cellular antenna assembly in the electronic device according to an embodiment of the present disclosure.
FIG. 6 is a schematic diagram illustrating the exemplary arrangement positions of the primary cellular antenna assembly and the diversity cellular antenna assembly in the electronic device according to another embodiment of the present disclosure.
FIG. 7 is a schematic diagram illustrating the exemplary arrangement positions of the primary cellular antenna assembly and the diversity cellular antenna assembly in the electronic device according to a further embodiment of the present disclosure.
FIG. 8 is a schematic circuit diagram illustrating a switch circuit and an impedance matching circuit of the primary cellular antenna assembly according to an embodiment of the present disclosure.
FIG. 9 is a schematic diagram illustrating the return loss of the primary cellular antenna assembly according to an embodiment of the present disclosure.
FIG. 10 is a schematic diagram illustrating exemplary arrangement positions of a GPS antenna assembly, a WiFi antenna assembly, and a NFC antenna assembly in the electronic device according to an embodiment of the present disclosure.

### DETAILED DESCRIPTION OF PREFERRED EMBODIMENTS

In order to facilitate understanding of the present disclosure, the present disclosure will be described more comprehensively below in conjunction with the drawings. Embodiments of the present disclosure are provided in the drawings. However, the present disclosure may be implemented in many different ways, and it is not limited to the embodiments described herein. On the contrary, the purpose of providing these embodiments is to make the content disclosed by the present disclosure more thorough and comprehensive.

Unless otherwise defined, all technical and scientific terms used herein have the same meanings as commonly understood by those skilled in the art to which the present disclosure belongs. The terms used in the specification of the present disclosure are only for the purpose of describing specific embodiments, and are not intended to limit the present disclosure.

It is understandable that terms "first", "second" and the like used in the present disclosure may be used to describe various elements herein, but these elements are not limited by these terms. These terms are only used to distinguish one element from another. For example, without departing from the scope of the present disclosure, a first resistor may be called a second resistor, and similarly, a second resistor may be called a first resistor. Both the first resistor and the second resistor are resistors, but they are not a same resistor.

It is understandable that "connection" in the following embodiments shall be understood as "electrical connection", "communication connection" and the like if there is transmission of electrical signals or data between connected circuits, modules, units and the like.

As used herein, the singular forms "a", "an" and "the" may also include the plural forms unless the context clearly indicates otherwise. It is also understandable that terms "include/comprise" or "have" and the like specify the existence of the stated features, units, steps, operations, components, parts or combinations thereof, but do not exclude the possibility of the existence or addition of one or more other features, units, steps, operations, components, parts or combinations thereof. In addition, the term "and/or" used herein includes any and all combinations of the relevant listed items.

The antenna of an electronic device is an indispensable component for the electronic device to perform communication. Taking a mobile phone as an example of the electronic device, in the case of a conventional separated middle frame, the antenna is provided on the inner surface of the B-shell (i.e., the middle frame). With this antenna design, the antenna has a large wiring area and a large clearance area, and good antenna performance is provided.

However, with users' extreme demands for the functions and appearance of mobile phones, mobile phones with an integrated middle frame have become the mainstream. At present, more and more mobile phones adopt a rear shell and a middle frame which are in an integrated structure. However, the above antenna design scheme for the separated middle frame is no longer applicable to mobile phones with an integrated middle frame structure.

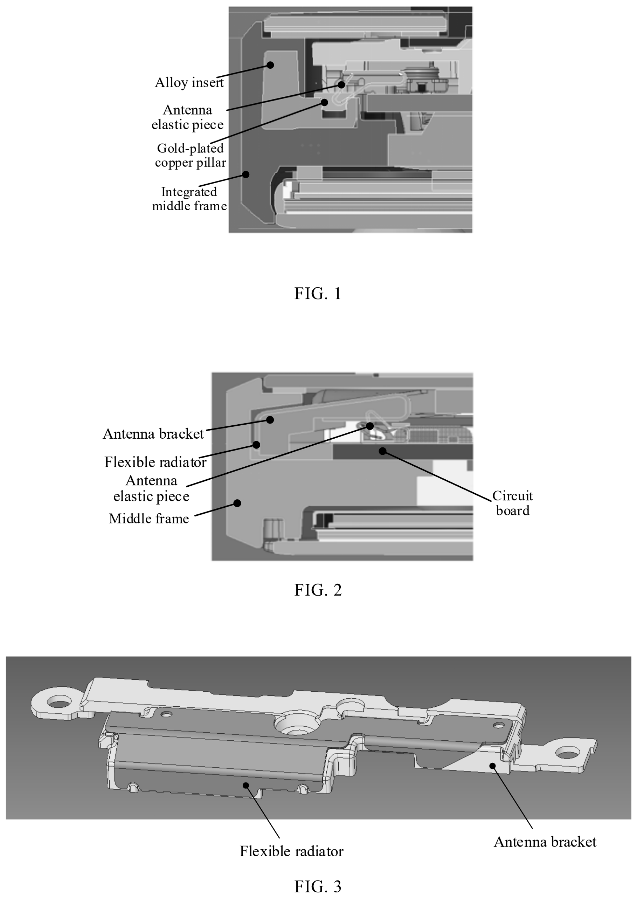

In the related art, as illustrated in FIG. 1 which is a schematic diagram illustrating an exemplary antenna arrangement of a mobile phone adopting an integrated middle frame, for the mobile phone with an integrated middle frame structure, an alloy insert inherent in the integrated middle frame is generally used as an antenna for the mobile phone. The alloy insert needs to be divided into multiple relatively independent insert structures. Usually, for the convenience of molding and processing, the multiple independent insert structures need to be connected by a material-connecting structure, and CNC cutting is performed after the molding is completed. This leads to complex antenna molding and processing, long production cycle and high antenna cost.

In addition, in order to improve the contact reliability between the alloy insert and the circuit board of the mobile phone, at present, gold-plated copper foil needs to be riveted or spot-welded at the position of the antenna feed point where the alloy insert is connected to the circuit board of the mobile phone, which further increases the material cost and processing cost of the antenna. Therefore, the antenna arrangement method for the integrated middle frame structure in the related art has the problems of poor arrangement flexibility and high cost.

In view of this, the embodiments of the present disclosure provide an antenna assembly and an electronic device, which can improve the arrangement flexibility of the antenna assembly in the electronic device and reduce the cost of the antenna assembly. The implementations of the antenna assembly and the electronic device provided in the embodiments of the present disclosure will be exemplarily described below in conjunction with drawings.

The antenna assembly provided by the embodiments of the present disclosure may be provided in an electronic device. The electronic device may include for example smart phones, tablet computers, Internet of Things (IoT) devices, and portable wearable devices. The IoT devices may be smart speakers, smart TVs, smart air conditioners, smart in-vehicle devices, smart cars, etc. The portable wearable devices may be smart watches, smart bracelets, head-mounted devices, etc.

In an embodiment, as illustrated in FIG. 2, a cross-sectional view of the electronic device along a first direction when the antenna assembly provided by the embodiments of the present disclosure is provided in the electronic device is shown. Taking the electronic device as a smart phone, the first direction may be a direction parallel to a display screen of the smart phone.

The electronic device provided in the embodiments of the present disclosure includes a middle frame and a housing which are in an integrated structure, i.e., the electronic device adopts an integrated middle frame structure. A circuit board is provided on the middle frame, and the circuit board may be composed of a multi-layer circuit board, electronic components, and connecting wires to realize various functions of the electronic device.

There a gap between the circuit board and the housing, that is, the circuit board provided on the middle frame is not completely attached onto the housing, and there is a cavity defined between the circuit and the housing. The antenna assembly provided by the embodiments of the present disclosure may be arranged in this gap.

Exemplarily, the antenna assembly may include an antenna bracket and a flexible radiator. The antenna bracket is accommodated in the gap between the circuit board and the housing, one end of the antenna bracket is fixedly connected to the middle frame, and the other end of the antenna bracket is a free end. The antenna bracket is configured to support the flexible radiator, and the flexible radiator is electrically connected to the circuit board for signal transmission and reception.

Exemplarily, the antenna bracket may be made of an insulating material. For example, the antenna bracket is a plastic bracket. The flexible radiator may be a flexible printed circuit (FPC) antenna body.

In this way, for an electronic device with a middle frame and a housing which are in an integrated structure, the FPC is arranged on the plastic bracket to realize the antenna performance. Different from the conventional method of using the alloy insert inherent in the integrated middle frame as the antenna for the mobile phone, there is no need to divide the alloy insert into multiple relatively independent insert structures, and there is also no need to connect the multiple independent insert structures using a material-connecting structure during the molding and processing stage, and perform the CNC cutting after completion of the molding. The antenna bracket and the flexible radiator provided in the embodiments of the present disclosure have a simple manufacturing process and low cost, thereby shortening the processing cycle of the antenna assembly and reducing the cost of the antenna assembly.

The following will exemplarily describe the possible shapes of the antenna bracket and the arrangement modes of the flexible radiator on the antenna bracket. First, the possible shapes of the antenna bracket are introduced.

Exemplarily, there may be multiple antenna assemblies, and each antenna assembly includes at least one set of the antenna bracket and flexible radiator. The multiple antenna assemblies may include for example a cellular antenna assembly, a Global Positioning System (GPS) antenna assembly, and a Wireless Fidelity (WiFi) antenna assembly.

Different antenna assemblies may be arranged at different positions of the electronic device, for example, they are respectively arranged at the top of the electronic device, the bottom of the electronic device, or the lateral side of the electronic device. Taking the top of the electronic device as an example, different antenna assemblies may be respectively arranged at the two ends of the top.

The shape of the gap between the circuit board and the housing may be different at different positions of the electronic device. To better utilize the gap between the circuit board and the housing and improve the antenna performance of the antenna assembly, in the embodiments of the present disclosure, the shape of the antenna bracket may match the shape of the gap which accommodates the antenna bracket. "Match" means that the shape of the antenna bracket may be a shape obtained by scaling down the shape of the corresponding gap by a preset ratio. In this way, it may be ensured that the antenna bracket can still be accommodated in the gap after supporting the flexible radiator, without additionally increasing the volume of the electronic device.

In other possible implementations, the individual antenna brackets may also have a unified fixed shape, which may be accommodated in the gap at different positions of the electronic device. This can further reduce the processing difficulty and the processing cost.

Next, the arrangement modes of the flexible radiator on the antenna bracket are introduced.

In the embodiments of the present disclosure, the flexible radiator may be attached onto multiple surfaces of the antenna bracket, and the multiple surfaces include at least a surface parallel to the circuit board and a surface perpendicular to the circuit board.

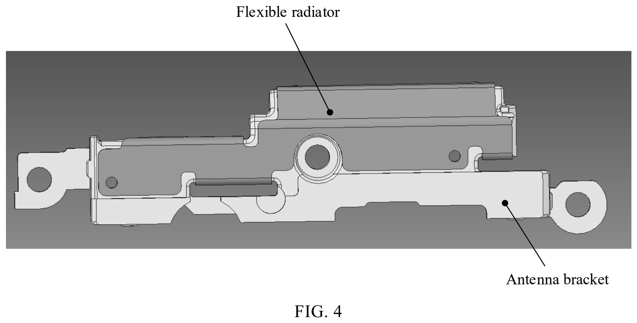

Exemplarily, as illustrated in FIG. 3 and FIG. 4, FIG. 3 is a schematic diagram illustrating an exemplary antenna assembly from a first perspective, and FIG. 4 is a schematic diagram illustrating the exemplary antenna assembly from a second perspective.

As illustrated in FIG. 3 and FIG. 4, the flexible radiator is attached onto two surfaces of the antenna bracket, and the two surfaces include a surface parallel to the circuit board and a surface perpendicular to the circuit board. In this way, the flexible radiator on the surface parallel to the circuit board may provide radiation performance in the x and y directions, and the flexible radiator on the surface perpendicular to the circuit board may provide radiation performance in the z direction.

The arrangement mode of the antenna assembly in the embodiments of the present disclosure not only ensures the antenna performance, but also enables the FPC antenna with lower cost to be implemented in the electronic device with an integrated middle frame structure, improving the arrangement flexibility of the antenna assembly.

In an embodiment, as illustrated in FIG. 2, the antenna assembly in the embodiments of the present disclosure further includes an antenna elastic piece (or elastic sheet). The antenna elastic piece may be a metal elastic piece or an alloy elastic piece. The flexible radiator is electrically connected to the circuit board through the antenna elastic piece, and good contact conduction between the flexible radiator and the circuit board may be enabled through the antenna elastic piece.

In some implementations, as illustrated in FIG. 2, the flexible radiator is electrically connected to the circuit board, through the antenna elastic piece at the free end of the antenna bracket; alternatively, the flexible radiator may also be electrically connected to the circuit board, through the antenna elastic piece at the end of the antenna bracket that is fixedly connected to the middle frame. The position of the antenna elastic piece is not specifically limited herein.

In summary, in the above embodiments, the antenna bracket is arranged in the gap between the circuit board and the housing to support the flexible radiator, so as to realize the antenna performance. The antenna assembly has a simple manufacturing process and a significantly reduced cost. In addition, there is no need to spot-weld gold-plated copper foil at the connection position where the flexible radiator and the circuit board is connected to improve contact reliability, thereby further reducing the cost of the antenna assembly and making the arrangement of the antenna assembly more flexible.

Based on any of the embodiments illustrated in FIG. 2 to FIG. 4, this embodiment introduces, in a case where there are multiple antenna assemblies, the arrangement of the multiple antenna assemblies in the electronic device. The arrangement positions of the multiple antenna assemblies in the electronic device do not overlap, and each antenna assembly may include at least one set of the above-mentioned antenna bracket and flexible radiator.

In the embodiments of the present disclosure, the multiple antenna assemblies include a primary cellular antenna assembly and a diversity cellular antenna assembly, and both the primary cellular antenna assembly and the diversity cellular antenna assembly are configured to transmit and receive cellular signals.

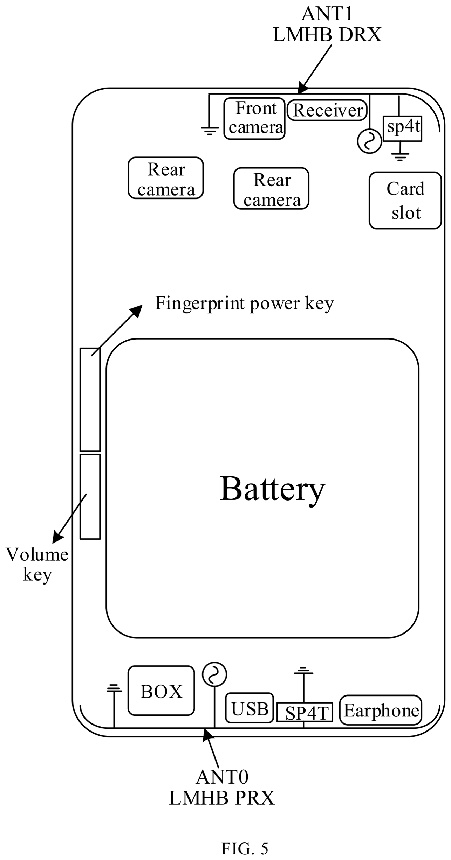

The following will exemplarily describe several possible arrangement positions of the primary cellular antenna assembly and the diversity cellular antenna assembly in the electronic device.
1) As illustrated in FIG. 5, a schematic diagram exemplarily illustrating the arrangement positions of a primary cellular antenna assembly and a diversity cellular antenna assembly in the electronic device is shown.

As illustrated in FIG. 5, the primary cellular antenna assembly is arranged at the bottom of the electronic device, and the diversity cellular antenna assembly is arranged at the top of the electronic device. ANT0 (Antenna 0) illustrated in FIG. 5 is the primary (PRX, Primary Receive) cellular antenna assembly, and ANT1 (Antenna 1) illustrated in FIG. 5 is the diversity (DRX, Diversity Receive) cellular antenna assembly.

Each of the primary cellular antenna assembly and the diversity cellular antenna assembly supports the transmission and reception of cellular signals at the LB (Low Band) and MHB (Middle High Band) frequency bands. During use, if the primary cellular antenna assembly is blocked or in other scenarios that affect the transmission and reception of cellular signals, the diversity cellular antenna assembly may be switched to for transmitting and receiving the cellular signals, thereby improving the reliability of signal transmission and reception.

2) This embodiment is the same as the embodiment illustrated in FIG. 5 in that: the primary cellular antenna assembly is arranged at the bottom of the electronic device, and the primary cellular antenna assembly supports the transmission and reception of cellular signals at the LB and MHB frequency bands.

The difference between this embodiment and the embodiment illustrated in FIG. 5 lies in that: the diversity cellular antenna assembly is split, and the diversity cellular antenna assembly is divided into a low-frequency diversity cellular antenna assembly and a middle-high frequency diversity cellular antenna assembly. The low-frequency diversity cellular antenna assembly supports the transmission and reception of cellular signals at the LB frequency band, and the middle-high frequency diversity cellular antenna assembly supports the transmission and reception of cellular signals at the MHB frequency band. Then, the low-frequency diversity cellular antenna assembly and the middle-high frequency diversity cellular antenna assembly are arranged at the top of the electronic device and/or the lateral side of the electronic device.

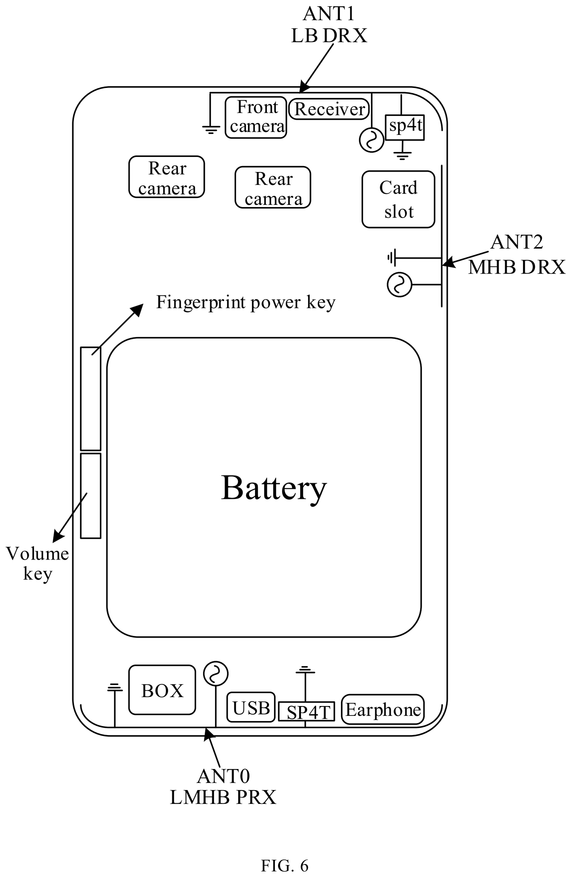

In a possible implementation, as illustrated in FIG. 6, a schematic diagram exemplarily illustrating the arrangement positions of the primary cellular antenna assembly and the diversity cellular antenna assembly in the electronic device according to an embodiment is shown.

As illustrated in FIG. 6, the low-frequency diversity cellular antenna assembly (ANT1 illustrated in FIG. 6) is arranged at the top of the electronic device, and the middle-high frequency diversity cellular antenna assembly (ANT2 illustrated in FIG. 6) is arranged at the lateral side of the electronic device.

In another possible implementation, the low-frequency diversity cellular antenna assembly may also be arranged at the lateral side of the electronic device, and the middle-high frequency diversity cellular antenna assembly may also be arranged at the top of the electronic device.

In this way, by splitting the diversity cellular antenna assembly and arranging the low-frequency diversity cellular antenna assembly or the middle-high frequency diversity cellular antenna assembly in the diversity cellular antenna assemblies at the lateral side of the electronic device, the attenuation amplitude of the antenna performance in the head-hand mode is reduced. In addition, the splitting of the diversity cellular antenna assembly also makes the antenna performance test more flexible.

In this embodiment, the low-frequency diversity cellular antenna assembly or the middle-high frequency diversity cellular antenna assembly in the diversity cellular antenna assemblies is arranged at the lateral side of the electronic device, and the lateral side may be a lateral side of the electronic device where no volume key is arranged. This can reduce the difficulty of antenna routing and help improve the antenna performance.

3) This embodiment is the same as the embodiment illustrated in FIG. 5 in that: the diversity cellular antenna assembly is arranged at the top of the electronic device, and the diversity cellular antenna assembly supports the transmission and reception of cellular signals at the LB and MHB frequency bands.

The difference between this embodiment and the embodiment illustrated in FIG. 5 lies in that: the primary cellular antenna assembly is split, and the primary cellular antenna assembly is divided into a low-frequency primary cellular antenna assembly and a middle-high frequency primary cellular antenna assembly. The low-frequency primary cellular antenna assembly supports the transmission and reception of cellular signals at the LB frequency band, and the middle-high frequency primary cellular antenna assembly supports the transmission and reception of cellular signals at the MHB frequency band. Then, the low-frequency primary cellular antenna assembly and the middle-high frequency primary cellular antenna assembly are arranged at the bottom of the electronic device and/or the lateral side of the electronic device.

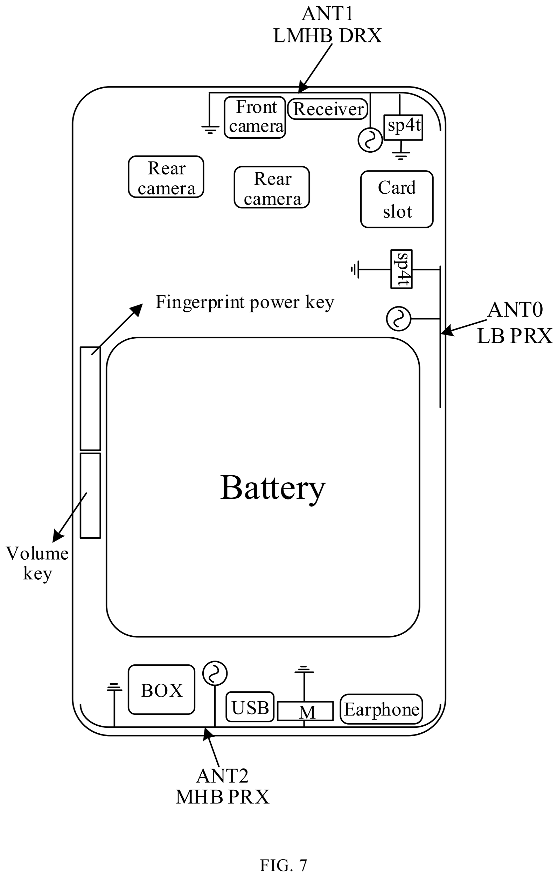

In a possible implementation, as illustrated in FIG. 7, a schematic diagram exemplarily illustrating the arrangement positions of the primary cellular antenna assembly and the diversity cellular antenna assembly in the electronic device according to an embodiment is shown.

As illustrated in FIG. 7, the low-frequency primary cellular antenna assembly (e.g., ANT0 illustrated in FIG. 7) is arranged at the lateral side of the electronic device, and the middle-high frequency primary cellular antenna assembly (e.g., ANT2 illustrated in FIG. 7) is arranged at the bottom of the electronic device.

In another possible implementation, the low-frequency primary cellular antenna assembly may also be arranged at the bottom of the electronic device, and the middle-high frequency primary cellular antenna assembly may also be arranged at the lateral side of the electronic device.

In this way, by splitting the primary cellular antenna assembly and arranging the low-frequency primary cellular antenna assembly or the middle-high frequency primary cellular antenna assembly in the primary cellular antenna assemblies at the lateral side of the electronic device, the attenuation amplitude of the antenna performance in the head-hand mode is reduced. In addition, the splitting of the primary cellular antenna assembly also makes the antenna performance test more flexible.

Similar to the embodiment illustrated in FIG. 6, in this embodiment, the low-frequency primary cellular antenna assembly or the middle-high frequency primary cellular antenna assembly in the primary cellular antenna assemblies is arranged at the lateral side of the electronic device, and the lateral side may be a lateral side of the electronic device where no volume key is arranged. This can reduce the difficulty of antenna routing and help improve the antenna performance.

The above has exemplarily described several possible arrangement positions of the primary cellular antenna assembly and the diversity cellular antenna assembly in the electronic device.

In the embodiments of the present disclosure, each of the primary cellular antenna assembly and the diversity cellular antenna assembly includes a switch circuit and an impedance matching circuit. The switch circuit is configured to switch the working frequency of the primary cellular antenna assembly or the diversity cellular antenna assembly, and the impedance matching circuit is configured to perform radio frequency (RF) impedance matching on the primary cellular antenna assembly or the diversity cellular antenna assembly.

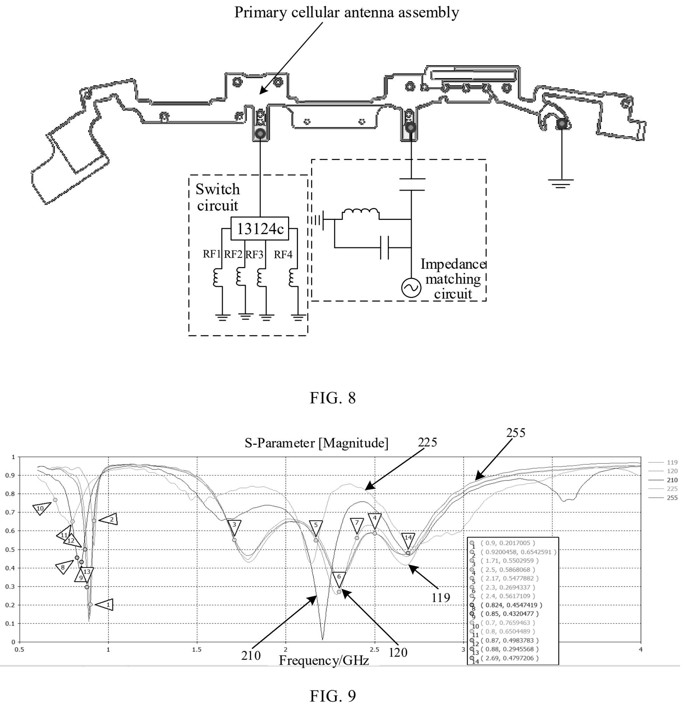

Exemplarily, as illustrated in FIG. 8, a schematic circuit diagram exemplarily illustrating the switch circuit and the impedance matching circuit of the primary cellular antenna assembly is shown. The arrangement position of the primary cellular antenna assembly in the electronic device may be as illustrated in FIG. 5.

The switch circuit is connected at the tuning point of the primary cellular antenna assembly through an elastic piece. The switch circuit adjusts the low and medium frequencies of the primary cellular antenna assembly by adjusting the ground return path (e.g., RF1, RF2, RF3, or RF4 illustrated in FIG. 8), and 13124c illustrated in FIG. 8 is a switch component.

The impedance matching circuit is connected to the primary cellular antenna assembly through an elastic piece. The impedance matching circuit may perform RF impedance matching on the primary cellular antenna assembly, so that the impedance of the primary cellular antenna assembly is close to 50 ohms.

In this way, the switch circuit in this embodiment can automatically adjust the working frequency of the primary cellular antenna assembly/diversity cellular antenna assembly, making the antenna assembly more intelligent.

As illustrated in FIG. 9, a schematic diagram illustrating the return loss of the primary cellular antenna assembly according to an embodiment is shown. The abscissa in FIG. 9 represents frequency ranging from 0 to 4 GHz. In FIG. 9, the curves numbered 119, 120, 210, 225, and 255 respectively represent the return loss curves obtained when the switch circuit illustrated in FIG. 8 are in four modes of RF1-RF4 and the switch is turned on. As can be seen from FIG. 9, the primary cellular antenna assembly in the embodiments of the present disclosure has a good return loss performance.

Based on the embodiment illustrated in FIG. 5 above, in this embodiment, in addition to the primary cellular antenna assembly and the diversity cellular antenna assembly, the multiple antenna assemblies further include at least one of a GPS antenna assembly, a WiFi antenna assembly, and an NFC antenna assembly.

The GPS antenna assembly is configured to transmit and receive GPS signals, the WiFi antenna assembly is configured to transmit and receive WiFi signals, and the NFC (Near Field Communication) antenna assembly is configured to transmit and receive NFC signals.

The following will exemplarily describe the arrangement modes of the GPS antenna assembly, the WiFi antenna assembly, and the NFC antenna assembly in the electronic device.

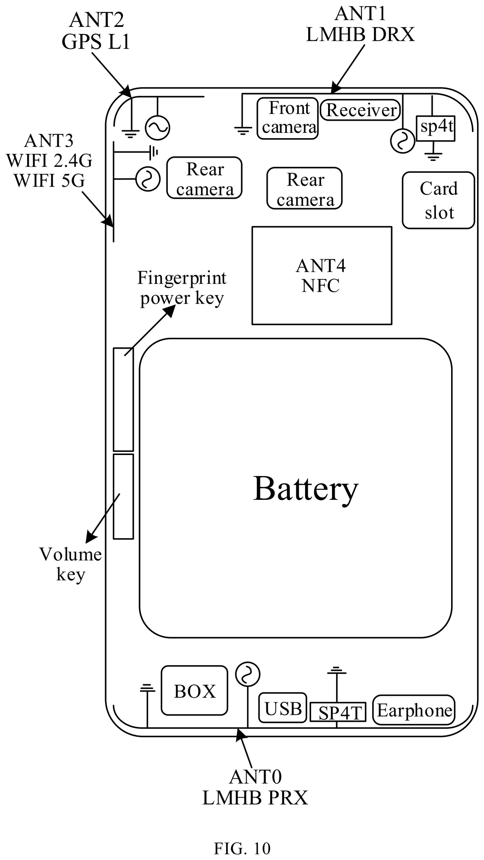

As illustrated in FIG. 10, a schematic diagram exemplarily illustrating the arrangement positions of the GPS antenna assembly, the WiFi antenna assembly, and the NFC antenna assembly in the electronic device is shown.

As illustrated in FIG. 10, the GPS antenna assembly is arranged at the top of the electronic device to facilitate the transmission and reception of GPS signals. If the primary cellular antenna assembly is also arranged at the top of the electronic device, the GPS antenna assembly and the primary cellular antenna assembly are respectively arranged at the two ends of the top of the electronic device. If the diversity cellular antenna assembly is also arranged at the top of the electronic device, the GPS antenna assembly and the diversity cellular antenna assembly are respectively arranged at the two ends of the top of the electronic device.

As illustrated in FIG. 10, the multiple antenna assemblies further include an NFC antenna assembly which is configured to transmit and receive NFC signals.

As illustrated in FIG. 10, the WiFi antenna assembly is arranged at the lateral side of the electronic device and close to the GPS antenna assembly. This is conducive to sharing a signal transceiver chip by the WiFi antenna assembly and the GPS antenna assembly. The lateral side of the electronic device where the WiFi antenna assembly is arranged may be a lateral side where the volume key is arranged. In this way, the WiFi antenna assembly can be staggered from the divided primary cellular antenna assembly and the divided diversity cellular antenna assembly located at the waist of the electronic device, which is beneficial to improving the communication quality.

Based on the same inventive concept, the embodiments of the present disclosure further provide an electronic device. The electronic device includes a middle frame and a housing which are in an integrated structure, a circuit board provided on the middle frame, and the antenna assembly according to any of the above embodiments. There is a gap between the circuit board and the housing. The antenna assembly includes an antenna bracket and a flexible radiator. The antenna bracket is accommodated in the gap, and one end of the antenna bracket is fixedly connected to the middle frame. The antenna bracket is configured to support the flexible radiator, and the flexible radiator is electrically connected to the circuit board for signal transmission and reception.

The solution to solve the problem as provided by this electronic device is similar to the solution recorded in the above embodiments of the antenna assembly, and reference may be made to the above definitions on the antenna assembly, which will not be repeated here.

The technical features of the above-mentioned embodiments may be combined arbitrarily. To make the description concise, not all possible combinations of the technical features in the above-mentioned embodiments are described. However, as long as there is no contradiction in the combination of these technical features, they should be regarded as falling within the scope of the disclosure.

The above-mentioned embodiments only illustrate several implementations of the present disclosure, and their descriptions are more specific and detailed, but they cannot be understood as limiting the scope of the disclosure. It is notable that, for those of ordinary skill in the art, several modifications and improvements may also be made without departing from the concept of the present disclosure, but all of them fall within the scope of protection of the present disclosure. Therefore, the scope of protection of the present disclosure shall be subject to the appended claims.

## Claims

1. An antenna assembly, for an electronic device, wherein the electronic device comprises a middle frame and a housing, the middle frame and the housing are in an integrated structure, a circuit board is provided on the middle frame, there is a gap between the circuit board and the housing, and the antenna assembly comprises:
an antenna bracket, wherein the antenna bracket is accommodated in the gap, and one end of the antenna bracket is fixedly connected to the middle frame; and
a flexible radiator, wherein the antenna bracket is configured to support the flexible radiator, and the flexible radiator is electrically connected with the circuit board for signal transmission and reception.

2. The antenna assembly of claim 1, wherein the flexible radiator is attached onto a surface of the antenna bracket.

3. The antenna assembly of claim 1, wherein a shape of the antenna bracket matches a shape of the gap.

4. The antenna assembly of any one of claims 1-3, wherein the flexible radiator is electrically connected with the circuit board through an antenna elastic piece at a free end of the antenna bracket.

5. The antenna assembly of any one of claims 1-3, wherein there are a plurality of the antenna assemblies, and arrangement positions where the plurality of the antenna assemblies are arranged in the electronic device do not overlap.

6. The antenna assembly of claim 5, wherein the plurality of the antenna assemblies comprise a primary cellular antenna assembly and a diversity cellular antenna assembly, both the primary cellular antenna assembly and the diversity cellular antenna assembly are configured to transmit and receive cellular signals.

7. The antenna assembly of claim 6, wherein the primary cellular antenna assembly is configured to be arranged at a bottom of the electronic device, and the diversity cellular antenna assembly is configured to be arranged at a top of the electronic device.

8. The antenna assembly of claim 6, wherein the primary cellular antenna assembly is configured to be arranged at a bottom of the electronic device; and
the diversity cellular antenna assembly comprises a low-frequency diversity cellular antenna assembly and a middle-high frequency diversity cellular antenna assembly, wherein the low-frequency diversity cellular antenna assembly is configured to be arranged at a lateral side of the electronic device and the middle-high frequency diversity cellular antenna assembly is configured to be arranged at a top of the electronic device, alternatively, the low-frequency diversity cellular antenna assembly is configured to be arranged at the top of the electronic device and the middle-high frequency diversity cellular antenna assembly is configured to be arranged at the lateral side of the electronic device.

9. The antenna assembly of claim 6, wherein the diversity cellular antenna assembly is arranged at a top of the electronic device; and
the primary cellular antenna assembly comprises a low-frequency primary cellular antenna assembly and a middle-high frequency primary cellular antenna assembly, wherein the low-frequency primary cellular antenna assembly is configured to be arranged at a lateral side of the electronic device and the middle-high frequency primary cellular antenna assembly is configured to be arranged at a bottom of the electronic device, alternatively, the low-frequency primary cellular antenna assembly is configured to be arranged at the bottom of the electronic device and the middle-high frequency primary cellular antenna assembly is configured to be arranged at the lateral side of the electronic device.

10. The antenna assembly of claim 6, wherein the plurality of the antenna assemblies further comprise at least one of a GPS antenna assembly, a WiFi antenna assembly, and an NFC antenna assembly;
the GPS antenna assembly is configured to transmit and receive GPS signals, the WiFi antenna assembly is configured to transmit and receive WiFi signals, and the NFC antenna assembly is configured to transmit and receive NFC signals.

11. An electronic device, comprising:
a middle frame and a housing, wherein the middle frame and the housing are in an integrated structure, a circuit board is provided on the middle frame, and there is a gap between the circuit board and the housing; and
an antenna assembly comprising:
an antenna bracket, wherein the antenna bracket is accommodated in the gap, and one end of the antenna bracket is fixedly connected to the middle frame; and
a flexible radiator, wherein the antenna bracket is configured to support the flexible radiator, and the flexible radiator is electrically connected with the circuit board for signal transmission and reception.

12. The electronic device of claim 11, wherein the flexible radiator is attached onto a surface of the antenna bracket.

13. The electronic device of claim 11, wherein a shape of the antenna bracket matches a shape of the gap.

14. The electronic device of any one of claims 11-13, wherein the flexible radiator is electrically connected with the circuit board through an antenna elastic piece at a free end of the antenna bracket.

15. The electronic device of any one of claims 11-13, wherein there are a plurality of the antenna assemblies, and arrangement positions where the plurality of the antenna assemblies are arranged in the electronic device do not overlap.

16. The electronic device of claim 15, wherein the plurality of the antenna assemblies comprise a primary cellular antenna assembly and a diversity cellular antenna assembly, and both the primary cellular antenna assembly and the diversity cellular antenna assembly are configured to transmit and receive cellular signals.

17. The electronic device of claim 16, wherein the primary cellular antenna assembly is arranged at a bottom of the electronic device, and the diversity cellular antenna assembly is arranged at a top of the electronic device.

18. The electronic device of claim 16, wherein the primary cellular antenna assembly is arranged at a bottom of the electronic device; and
the diversity cellular antenna assembly comprises a low-frequency diversity cellular antenna assembly and a middle-high frequency diversity cellular antenna assembly, wherein the low-frequency diversity cellular antenna assembly is arranged at a lateral side of the electronic device and the middle-high frequency diversity cellular antenna assembly is arranged at a top of the electronic device, alternatively, the low-frequency diversity cellular antenna assembly is arranged at the top of the electronic device and the middle-high frequency diversity cellular antenna assembly is arranged at the lateral side of the electronic device.

19. The electronic device of claim 16, wherein the diversity cellular antenna assembly is arranged at a top of the electronic device; and
the primary cellular antenna assembly comprises a low-frequency primary cellular antenna assembly and a middle-high frequency primary cellular antenna assembly, wherein the low-frequency primary cellular antenna assembly is arranged at a lateral side of the electronic device and the middle-high frequency primary cellular antenna assembly is arranged at a bottom of the electronic device, alternatively, the low-frequency primary cellular antenna assembly is arranged at the bottom of the electronic device and the middle-high frequency primary cellular antenna assembly is arranged at the lateral side of the electronic device.

20. The electronic device of claim 16, wherein the plurality of the antenna assemblies further comprise at least one of a GPS antenna assembly, a WiFi antenna assembly, and an NFC antenna assembly;
the GPS antenna assembly is configured to transmit and receive GPS signals, the WiFi antenna assembly is configured to transmit and receive WiFi signals, and the NFC antenna assembly is configured to transmit and receive NFC signals.
